# EUROPÄISCHE PATENTSCHRIFT

(11) **EP 0 846 539 B1**
(45) Veröffentlichungstag und Bekanntmachung des Hinweises auf die Patenterteilung: **14.03.2001**
(21) Anmeldenummer: 97120356.7
(22) Anmeldetag: 20.11.1997
(51) Int. Cl.: B29C 33/64

(54) **Trennmittel für Formen zur Herstellung von Formkörpern aus Kunststoffen**
Release agent used on moulds for manufacturing of plastic molded products
Agent de démoulage pour la fabrication des objets moulés en matière plastique

(30) Priorität: 03.12.1996 DE 19650076
(43) Veröffentlichungstag der Anmeldung: 10.06.1998
(73) Patentinhaber: Goldschmidt AG, 45127 Essen (DE)
(72) Erfinder: Alexander, Peter, 45279 Essen (DE); Lammerting, Helmut, 58456 Herbede (DE)

(56) Entgegenhaltungen:
- EP-A- 0 612 600
- DE-C- 4 238 290
- US-A- 4 028 120
- PATENT ABSTRACTS OF JAPAN vol. 096, no. 012, 26. Dezember 1996 & JP 08 216163 A (MOON STAR CO), 27. August 1996

## Beschreibung

Die Erfindung betrifft Trennmittel für Formen zur Herstellung von Formkörpern aus Kunststoffen, insbesondere Polyurethanen, auf der Basis von siliciumorganischen Verbindungen und niedermolekularen Siloxanen.

Bei der Herstellung von Formkörpern aus Kunststoffen, insbesondere Polyurethanen, ist es üblich, die Formen vor dem Einbringen des Kunststoffes mit einem Trennmittel zu versehen. Die Trennmittel sollen in geringen Mengen wirksam sein, die einwandfreie Entformung des Formkörpers gewährleisten, jedoch nach der Entformung eine weitere Ver- und Bearbeitung, wie etwa eine Lackierung oder Verklebung, nicht negativ beeinflussen.

Als trennaktive Substanzen werden entsprechend dem Stand der Technik Wachse, Paraffine, Silicone, Ester und Salze von Fettsäuren und Fluorkohlenwasserstoffe verwendet.

Zur Erzielung eines gleichmäßigen, dünnen Filmes auf der Formwandung ist es von Vorteil, möglichst niedrigviskose Trennmittelzubereitungen mit hohem Benetzungsvermögen zu verwenden. Dies erfordert in der Regel die Verwendung lösungsmittelhaltiger Zubereitungen, wobei die Lösungsmittel von der meist erwärmten Oberfläche der Formwandung abdunsten und einen dünnen Trennmittelfilm hinterlassen sollen.

Seit etwa 1985 sind Trennmittel für oben genannten Einsatzzweck im Handel, welche etwa folgende typische Zusammensetzung in Gew.-% aufweisen:
- 8,75: Siliconöl einer Viskosität von [60 000 cP] 60Pa·s
- 8,75: Siliconharz
- 17,50: Octamethylcyclotetrasiloxan
- 5,00: nichtionischer Emulgator
- 60,00: Wasser.

Siliconöl und Siliconharz bilden dabei die trennaktive Komponente, während das cyclische Siloxan als flüchtiges Lösungsmittel für die trennaktive Komponente dient, welches mittels des Emulgators in Wasser emulgiert vorliegt. Bei der Anwendung verdunstet das cyclische Siloxan zusammen mit dem Wasser. Auf der Formwandung verbleibt ein dünner Trennmittelfilm.

Die DE-C-38 21 908 betrifft ebenfalls Trennmittel der vorgenannten Art. Dabei wird zum Stand der Technik ausgeführt, daß lösungsmittelhaltige Zubereitungen die Umwelt belasten, Trennmittel auf Wasserbasis aber die gestellten Anforderungen nicht erfüllen würden. Statt dessen sollen entsprechend der DE-C-38 21 908 als Trägersubstanz des Trennmittels Polysiloxanverbindungen eingesetzt werden, wobei die Trennmittel insbesondere folgende Zusammensetzung (in Gew.-Teilen) haben sollen:

### Variante 1:

- 60 bis 70: Polydimethyl-Tetracyclosiloxan
- 20 bis 30: Polydimethyl-Pentacyclosiloxan
- 5 bis 10: Siliconharz
- 5 bis 10: Siliconöl

### Variante 2:

- 90: Polydimethyl-Tetracyclosiloxan
- 10: Siliconöl oder Siliconharz

### Variante 3:

- 0,6: Amidwachs
- 0,5: metallseifenhaltige Wachse
- 2,1: Polydimethyl-Pentacyclosiloxan
wobei diese Mischungen bei 145 °C geschmolzen werden und 12,5 Teile Polydimethyl-Pentacyclosiloxan dispergiert werden in einem Gemisch aus
- 8,5: Siliconharz
- 75: Polydimethyl-Tetracyclosiloxan.

Die DE-C-42 38 290 betrifft ebenfalls ein Trennmittel der vorgenannten Art. Dort werden flüchtige Siloxane in flüchtigen Lösungsmitteln oder Lösungsmittelgemischen verwendet, die nach dem Auftragen abtrocknen und eine weitgehend trennmittelfreie Oberfläche hinterlassen. Bevorzugt werden niedrigsiedende Fluor- und/oder Chlorkohlenwasserstoffe verwendet. Diese Substanzen sind zwischenzeitlich nicht mehr erlaubt, da sie die Ozonschicht schädigen. Beim Verzicht dieser Produkte werden mit den in der DE-C-42 38 290 verwendeten aliphatischen Kohlenwasserstoffen Flammpunkte < 25 °C gemessen. Der Verarbeiter fordert heute Flammpunkte > 55 °C.

Aufgabe der vorliegenden Erfindung ist daher, Trennmittel aufzufinden, die diese Nachteile nicht aufweisen.

Überraschenderweise werden besonders gute Trennmittel erhalten, wenn man nicht cyclische Siloxane, sondern bestimmte destillativ erhaltene Schnitte von linearen Polysiloxanen mit ausgewählten trennaktiven siliciumorganischen Verbindungen kombiniert und in organischen Lösungsmitteln gelöst anwendet.

Gegenstand der vorliegenden Erfindung ist deshalb, ein Trennmittel, welches aus
- 0,1 bis 5,0 Gew.-%: eines γ-Aminopropylgruppen enthaltenden Polysiloxans,
- 4,0 bis 60,0 Gew.-%: eines Polysiloxans der Formel I 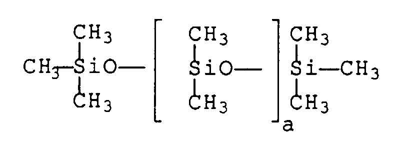 wobei a eine Zahl von 7 bis 13 ist und das Polysiloxan < 5 Gew.-% Verbindungen enthält, bei denen a < 7 ist und höchstens 5 Gew.-% an Verbindungen enthält, bei denen a > 13 ist, und
- 35,0 bis 95,9 Gew.-%: eines Lösungsmittels oder Lösungsmittelgemisches auf der Basis von halogenfreien Kohlenwasserstoffen mit einem Flammpunkt > 55 °C besteht.

Es sind außerdem solche Trennmittel bevorzugt, welche 0,2 bis 2,0 Gew.-% Polysiloxane mit γ-Aminopropylgruppen enthalten.

Als γ-Aminopropylgruppen enthaltendes Polysiloxan wird vorzugsweise ein Polysiloxan der allgemeinen Formel II 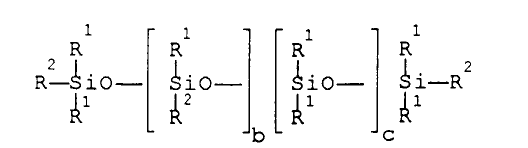 verwendet, wobei
- R¹: ein Alkylrest mit 1 bis 18 Kohlenstoffatomen ist, jedoch mindestens 50 % der Reste R¹ Methylreste sind,
- R²: (1) die Bedeutung des Restes R¹ hat oder (2) ein γ-Aminopropylrest ist, mit der Maßgabe, daß mindestens ein Rest R² die Bedeutung (2) hat,
- b: eine Zahl von 0 bis 12 und
- c: eine Zahl von 20 bis 400 ist.

Vorzugsweise ist der Index b eine Zahl von 1 bis 4 und der Index c eine Zahl von 50 bis 150.

Das Polysiloxan der Formel I 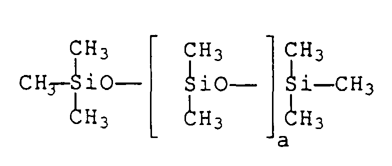 ist durch das wesentliche Merkmal gekennzeichnet, daß es im Gemisch < 5 Gew.-% Siloxane enthält, deren a-Wert < 7 ist und max. 5 Gew.-% der Siloxane enthält, deren a-Wert > 13 ist. Verbindungen, bei denen der Wert von a > 13 ist, sind zwar trennaktiv, führen jedoch zu einer starken Rückstandsbildung, so daß die Formteiloberfläche Trennmittelrückstände aufweist. Vorzugsweise ist bei den erfindungsgemäß zu verwendenden Polysiloxanen der Index a eine Zahl von 7 bis 12.

Derartige Siloxane lassen sich aus Gemischen durch Destillation abtrennen. Im Gegensatz zu üblichen Siloxanen des Standes der Technik handelt es sich also nicht um äquilibrierte Gemische statistischer Zusammensetzung, sondern um "Schnitte" definierter Kettenlänge. Dabei hat sich überraschenderweise herausgestellt, daß derartig ausgewählte Siloxane eine gewisse Migrationsneigung aufweisen, so daß sie in den Kunststoff- bzw. Polyurethanschaum eindringen und rückstandsfreie, trockene Oberflächen entstehen und darüber hinaus selbst trennaktive Eigenschaften aufweisen und sich insbesondere darin von cyclischen Siloxanen, wie Octamethylcyclotetrasiloxan und Decamethylcyclopentasiloxan, unterscheiden. Erst hierdurch wird es möglich, den Gehalt an γ-Aminopropylsiloxan im Trennmittel niedrig zu halten.

Von besonderer Bedeutung ist auch der Gehalt an Lösungsmitteln. Durch die Verwendung der Trennmittel in gelöster Form können dünne, gleichmäßige Schichten auf den Formwänden erzielt werden. Besonders bevorzugt sind dabei als Lösungsmittel Isoparaffine, die einen Siedebereich von 171 bis 191 °C aufweisen. Diese Lösemittel verdunsten zum großen Teil in der verfügbaren Ablüftezeit von ca. 1 Min. Ein gewisser Anteil verbleibt in dem Trennmittelwirkstoff, wirkt sich aber nicht störend aus. Das verwendete Isoparaffin ist besonders hautfreundlich und mild im Geruch.

Bei der Verwendung des erfindungsgemäßen Trennmittels wird dieses zunächst auf die Formwandung mit üblichen Sprühgeräten, meist unter Verwendung eines Trägergases, wie Luft oder Inertgas, aufgesprüht. Die Formen sind in der Regel von der vorhergegangenen Nutzung noch warm, so daß das Lösungsmittel rasch abdunstet. Auf der Wandung der Form befindet sich nun das γ-Aminopropylsiloxan zusammen mit dem Siloxanschnitt in dünner Schicht. Die Formteile werden zur kompletten Form zusammengefügt. Der Thermoplast oder der reaktiv härtende Kunststoff wird in die Form gefüllt. Der Formling wird nach Verfestigung und/oder Abkühlung der Form entnommen. Nach der Entformung trocknet das erfindungsgemäß ausgewählte Siloxan im Lauf von einigen Stunden, meist innerhalb von 24 Stunden, ab. Auf dem Formkörper verbleibt nur der äußerst geringe Anteil an γ-Aminopropylsiloxan. Da das ausgewählte Siloxan selbst trennaktiv ist, kann der Gehalt des Trennmittels an γ-Aminopropylsiloxan sehr niedrig gehalten werden. Dieser auf den Formlingen verbleibende geringe Anteil γ-Aminopropylsiloxan stört bei der Weiterverarbeitung nicht. Dies war überraschend, da befürchtet werden mußte, daß beim Hantieren der Formteile Trennmittelrückstände abgegriffen werden. Eine spätere Verklebung der Formlinge oder eine Weiterverarbeitung der Formlinge durch Aufspritzen oder Aufformen zusätzlichen Kunststoffes (z. B. bei der Herstellung von Schuhen mit Mehrfachsohlen) wird nicht behindert.

In dem folgenden Beispiel werden die anwendungstechnischen Eigenschaften der erfindungsgemäßen Trennmittel gezeigt und mit denen von Trennmitteln des Standes der Technik gemäß DE-C-38 21 908 und DE-C-42 38 290 verglichen.

### Anwendungstechnische Vergleichsversuche

Zur Überprüfung der Trennkräfte, gemessen in kg/dm², wird ein Polyurethanschaum der Dichte 0,9 kg/dm³ hergestellt. Systeme dieser Art werden üblicherweise zur Herstellung von Schuhsohlen (Laufsohlen) eingesetzt. Dazu wird eine Testform aus Aluminium verwendet, die mit einem separaten Deckel mit Schraubzwingen geschlossen werden kann. Die Form wird auf eine Temperatur von 50 °C vorgewärmt. Die zu prüfende Trennmittelzubereitung wird mit einer luftzerstäubenden Pistole auf die Innenfläche der Testform und des Deckels gesprüht, so daß ein zusammenhängender Film entsteht.

Das Polyol/Isocyanat-Gemisch wird wie folgt hergestellt:

171 g einer verschäumungsfähigen Polyesterpolyolkomponente werden mit 192 g einer Isocyanatkomponente, basierend auf 4,4-Diisocyanatodiphenylmethan, durch intensives Rühren mit einem Laborrührer mit 2500 U/Min. 7 Sek. lang vermischt. Das noch flüssig vorliegende Reaktionsgemisch wird in die bereits vorbereitete Aluminiumform gegossen, der Deckel aufgelegt und mit Schraubzwingen verschlossen. Nach einer Standzeit von 4 Min. wird der Deckel entfernt. Es werden die hierfür notwendigen Zugkräfte mit einer Federwaage gemessen.

Es werden mit jeder Trennmittelzubereitung 10 aufeinander folgende Entformungen durchgeführt und aus den ermittelten Trennkräften ein statistischer Mittelwert gebildet. Nach jeweils 10 Entformungen wird die Rückstandsbildung auf der Formenoberfläche beurteilt. Die Formteiloberfläche wird sensorisch geprüft, wobei von Bedeutung ist, daß trockene, möglichst rückstandsfreie Oberflächen vorliegen. Trennmittelrückstände, die allein beim Hantieren auf andere Werkstoffe übertragen werden, können Benetzungsfehler beim Lackieren hervorrufen. Zur Beurteilung der Übertragbarkeit von Trennmittelsubstanzen wird ein Prüfblech mit dem entformten Formkörper in Kontakt gebracht. Dieses gegebenenfalls mit Trennmittelrückständen kontaminierte Blech wird mit einem handelsüblichen Autolack besprüht und das Ausmaß der Benetzungsstörung beurteilt.

Neben diesen Laborüberprüfungen werden einige der nachfolgend aufgeführten Trennmittelzubereitungen auf ihre Verwendbarkeit für ein Anschäumverfahren zur Herstellung zweifarbiger Sohlen überprüft. Bei diesem Verfahren wird zunächst die Laufsohle geschäumt und anschließend in einer zweiten Form die zweite Sohle, die in der Regel eine niedrigere Dichte aufweist, angeschäumt. Die Überprüfung der Trennmittelzubereitungen erfolgt an einem industrieüblichen Desma-Verschäumungsautomaten. Eine Haftungsprüfung wird manuell durch Reißversuche der angeschäumten Sohle durchgeführt.

Es werden folgende Trennmittel untersucht:

| Erfindungsgemäße Trennmittel (Mengenangabe in Gew.-%) | | | | | |
|---|---|---|---|---|---|
| Trennmittel | Siloxan I | | Siloxan II | Isoparaffin | |
| | a = | Menge | Menge | Siedebereich °C | Menge |
| 1 | 8 - 12 | 25 | 0,6 | 171 - 191 | 74,4 |
| 2 | 8 - 13 | 18 | 0,5 | 171 - 191 | 81,5 |
| 3 | 7 - 12 | 30 | 0,8 | 171 - 191 | 69,2 |

Bei dem Siloxan II hat der Index b einen Wert von 2, der Index c einen Wert von 100. Die α,ω-ständigen Reste R² sind Methylreste.

Nichterfindungsgemäße Trennmittel (Mengenangabe in Gew.-%)

| Vergleichstrennmittel 4 (Handelsprodukt) | |
|---|---|
| Siliconöl 60 000 cP | 8,75 |
| Siliconharz | 8,75 |
| Cyclotetrasiloxan | 17,50 |
| nichtionischer Emulgator | 5,0 |
| Wasser | 60,0 |

Die Vergleichstrennmittel 5 bis 7 werden gemäß DE-C-38 21 908 - Beispiel 1 - hergestellt. Da dem Beispiel keine konkreten Angaben über die Art des Siliconöles und des Siliconharzes entnommen werden können, werden zwei verschiedene handelsübliche Siliconöle unterschiedlicher Viskosität und drei verschiedene handelsübliche Siliconharze verschiedenen strukturellen Aufbaus eingesetzt.

| Vergleichstrennmittel 5 | |
|---|---|
| Siliconöl 1000 cP | 6,0 |
| Siliconharz | 6,0 |
| Cyclotetrasiloxan | 65,0 |
| Cyclopentasiloxan | 23,0 |

| Vergleichsmittel 6 | |
|---|---|
| Siliconöl 350 cP | 6,0 |
| Siliconharz, ethoxyfunktionell | 6,0 |
| Cyclotetrasiloxan | 65,0 |
| Cyclopentasiloxan | 23,0 |

| Vergleichstrennmittel 7 | |
|---|---|
| Siliconöl 350 cP | 6,0 |
| Methyl/Phenylsiliconharz | 6,0 |
| Cyclotetrasiloxan | 65,0 |
| Cyclopentasiloxan | 23,0 |

Vergleichstrennmittel 8 wird entsprechend DE-C-38 21 908 - Beispiel 2 - durchgeführt, wobei Angaben über Art des Siliconöles und Siliconharzes fehlen. Es werden deshalb die gleichen Produkte wie in den Trennmitteln 4 bis 6 verwendet

| | |
|---|---|
| Siliconöl 350 cP | 5,0 |
| Siliconharz | 5,0 |
| Cyclotetrasiloxan | 90,0 |

Vergleichstrennmittel 9 wird entsprechend DE-C-38 21 908 - Beispiel 3 - durchgeführt, wobei Angaben über Art des Siliconharzes fehlen. Es wird deshalb das gleiche Siliconharz wie in dem Trennmittel 4 verwendet

| | |
|---|---|
| Amidwachs | 0,6 |
| Ca/Mg-verseiftes Fischer-Tropsch-Wachs | 0,5 |
| Siliconharz | 8,5 |
| Cyclotetrasiloxan | 75,8 |
| Cyclopentasiloxan | 14,6 |

Vergleichstrennmittel 10 gemäß DE-C-42 38 290

| | |
|---|---|
| Siloxanschnitt Kettenlänge a = 2 - 6 | 30 |
| Aminosiloxan | 0,8 |
| aliph. Kohlenwasserstofffraktion | 40 |
| 140 - 160 Siedebereich 1,1-Dichlor-1-fluorethan | 25 |

Bei den anwendungstechnischen Versuchen werden folgende Ergebnisse erhalten:

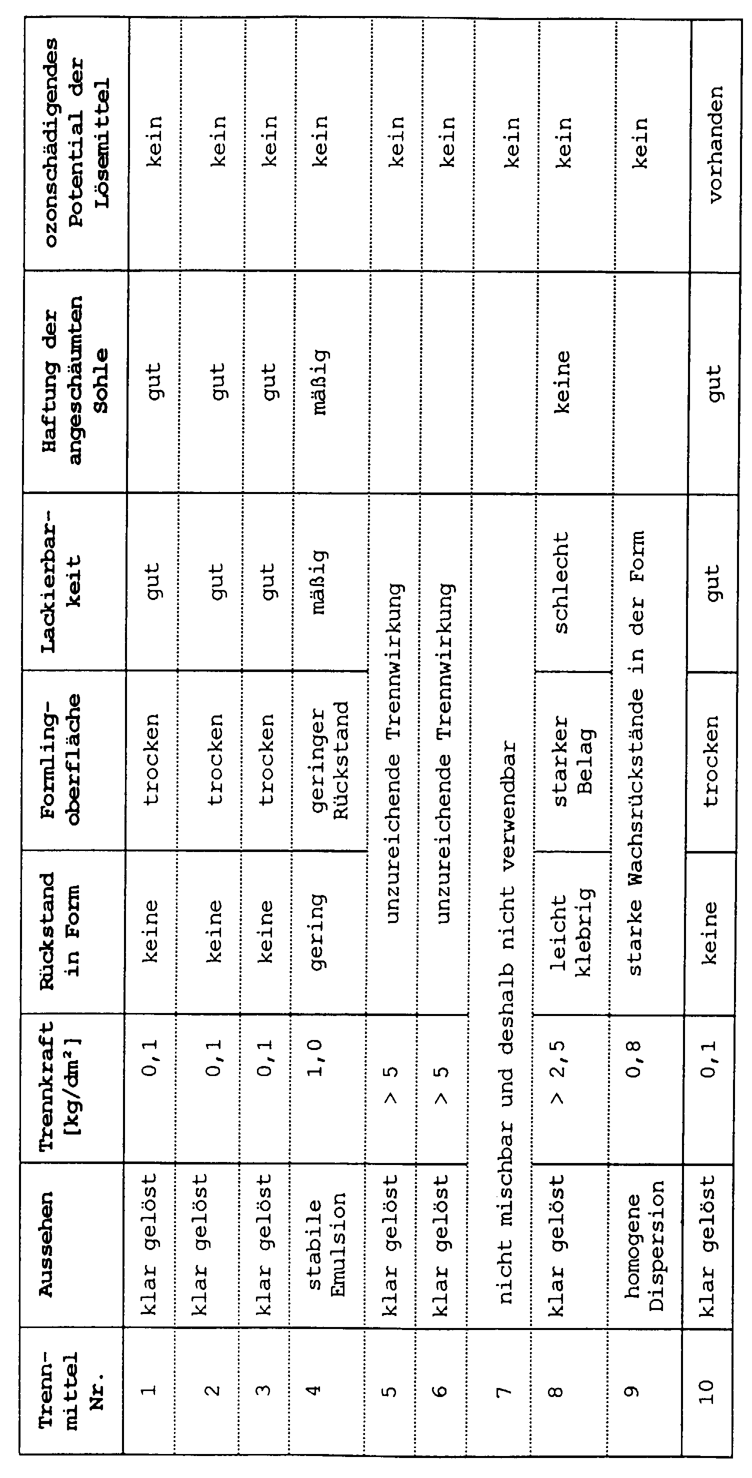

Die Vergleichsversuche zeigen die überlegenen Eigenschaften der erfindungsgemäßen Trennmittel. Mit den Trennmitteln der DE-C-38 21 908 konnten trotz Variation der verwendeten Siliconöle und Siliconharze keine befriedigenden Ergebnisse erhalten werden. Die in der DE-C-42 38 290 verwendeten Lösemittel gemäß Beispiel 10 dürfen aufgrund der ozonschädigenden Wirkung nicht mehr verwendet werden.

## Patentansprüche

1. Trennmittel für Formen zur Herstellung von Formkörpern aus Kunststoffen, insbesondere Polyurethanen, auf der Basis von siliciumorganischen Verbindungen und niedermolekularen Siloxanen, dadurch gekennzeichnet, daß es aus
0,1 bis 5,0 Gew.-% eines γ-Aminopropylgruppen enthaltenden Polysiloxans,
4,0 bis 60,0 Gew.-% eines Polysiloxans der Formel I 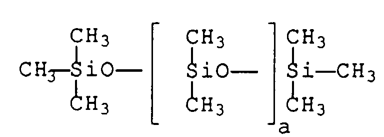 wobei a eine Zahl von 7 bis 13 ist und das Polysiloxan < 5 Gew.-% von Verbindungen enthält, bei denen a < 7 ist und höchstens 5 Gew.-% an Verbindungen enthält, bei denen a > 13 ist und
35,0 bis 95,9 Gew.-% eines Lösungsmittels oder Lösungsmittelgemisches auf der Basis von halogenfreien Kohlenwasserstoffen mit einem Flammpunkt > 55 °C besteht.

2. Trennmittel nach Anspruch 1, dadurch gekennzeichnet, daß a eine Zahl von 7 bis 12 ist.

3. Trennmittel nach Anspruch 1 oder 2, dadurch gekennzeichnet, daß es 0,2 bis 2,0 Gew.-% Polysiloxane mit γ-Aminopropylgruppen enthält.

4. Trennmittel nach Anspruch 1, 2 oder 3, dadurch gekennzeichnet, daß es als γ-Aminopropylsiloxan ein Polysiloxan der allgemeinen Formel II 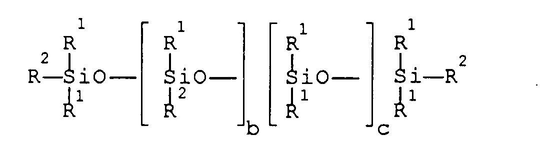 enthält, wobei
R¹ ein Alkylrest mit 1 bis 18 Kohlenstoffatomen ist, jedoch mindestens 50 % der Reste R¹ Methylreste sind,
R² (1) die Bedeutung des Restes R¹ hat oder (2) ein γ-Aminopropylrest ist, mit der Maßgabe, daß mindestens ein Rest R² die Bedeutung (2) hat,
b eine Zahl von 0 bis 12 und
c eine Zahl von 20 bis 400 ist.

5. Trennmittel nach Anspruch 4, dadurch gekennzeichnet, daß der Index b eine Zahl von 1 bis 4 und der Index c eine Zahl von 50 bis 150 ist.

6. Trennmittel nach Anspruch 1, dadurch gekennzeichnet, daß als Lösemittel ein aliphatischer Kohlenwasserstoff, insbesondere ein Isoparaffin im Siedebereich von 171 bis 191 °C verwendet wird, dessen Flammpunkt > 55 °C beträgt.

## Claims

1. Release agent for moulds for the production of shaped articles of plastics, in particular polyurethanes, which is based on organosilicon compounds and low molecular weight siloxanes, characterized in that it comprises
0.1 to 5.0 % by weight of a polysiloxane containing γ-aminopropyl groups,
4.0 to 60.0 % by weight of a polysiloxane of the formula I 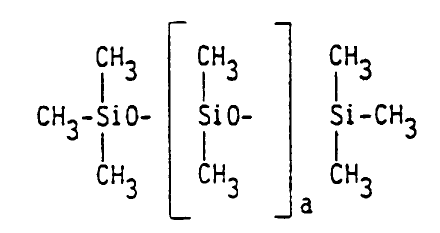 wherein a is a number from 7 to 13, and the polysiloxane comprises < 5% by weight of compounds in which a is < 7 and comprises not more than 5 % by weight of compounds in which a is > 13, and
35.0 to 95.9 % by weight of a solvent or solvent mixture based on halogen-free hydrocarbons having a flash point > 55°C.

2. Release agent according to Claim 1, characterized in that a is a number from 7 to 12.

3. Release agent according to Claim 1 or 2, characterized in that it comprises 0.2 to 2.0 % by weight of polysiloxanes having γ-aminopropyl groups.

4. Release agent according to Claim 1, 2 or 3, characterized in that it comprises, as the γ-amino-propylsiloxane, a polysiloxane of the general formula II 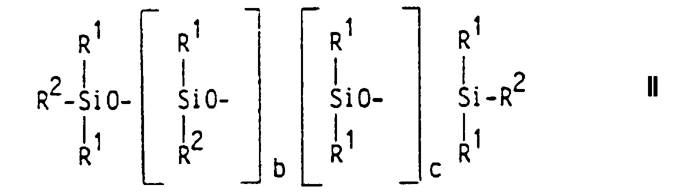 wherein
R¹ is an alkyl radical having 1 to 18 carbon atoms, but at least 50 % of the radicals R¹ are methyl radicals,
R² (1) has the meaning of the radical R¹ or (2) is a γ-aminopropyl radical, with the proviso that at least one radical R² has the meaning (2),
b is a number from 0 to 12 and
c is a number from 20 to 400.

5. Release agent according to Claim 4, characterized in that the index b is a number from 1 to 4 and the index c is a number from 50 to 150.

6. Release agent according to Claim 1, characterized in that the solvent used is an aliphatic hydrocarbon, in particular an isoparaffin in the boiling range from 171 to 191°C, whose flash point is > 55°C.

## Revendications

1. Agent de démoulage pour moules en vue de la fabrication d'objets moulés en matières plastiques, en particulier en polyuréthanne, à base de composés organosiliciés et de siloxanes à poids moléculaire faible, caractérisé en ce qu'il se compose
de 0,1 à 0,5 % en poids d'un polysiloxane contenant un groupement γ-aminopropyle,
de 4,0 à 60,0 % en poids d'un polysiloxane de formule I 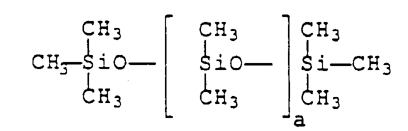
a étant un nombre de 7 à 13 et le polysiloxane contenant < 5% en poids de composés, pour lesquels a est < 7, et au plus 5% en poids de composés pour lesquels a est > 13, et
de 35 à 95,9% en poids d'un solvant ou d'un mélange de solvants à base d'hydrocarbures exempts d'halogènes, ayant un point d'inflammation > 55°C.

2. Agent de démoulage selon la revendication 1, caractérisé en ce que a est un nombre de 7 à 12.

3. Agent de démoulage selon la revendication 1 ou 2, caractérisé en ce qu'il contient de 0,2 à 2,0 % en poids de polysiloxanes à groupements γ-aminopropyle.

4. Agent de démoulage selon la revendication 1, 2 ou 3, caractérisé en ce qu'il contient, en tant que γ-aminopropylsiloxane, un polysiloxane de formule générale II 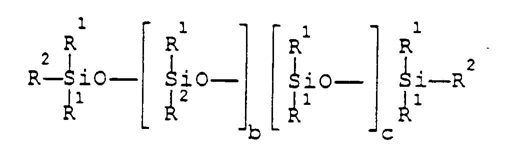
R¹ étant un résidu alkyle ayant de 1 à 18 atomes de carbone, 50% au moins des résidus R¹ étant toutefois des résidus méthyle,
R² ayant (1) la signification du résidu R¹ ou (2) étant un résidu γ-aminopropyle, sous réserve qu'au moins un résidu R² ait la signification (2),
b étant un nombre de 0 à 12, et
c étant un nombre de 20 à 400.

5. Agent de démoulage selon la revendication 14, caractérisé en ce que l'indice b est un nombre de 1 à 4 et en ce que l'indice c est un nombre de 50 à 150.

6. Agent de démoulage selon la revendication 4, caractérisé en ce que l'on utilise, en tant que solvant, un hydrocarbure aliphatique, en particulier une isoparaffine dans le domaine d'ébullition de 171°C à 191°C, dont le point d'inflammation est > 55°C.
